**Europäisches Patentamt**

**European Patent Office**

**Office européen des brevets**

(19)

(11) Numéro de publication : **0 077 263 B1**

## (12) FASCICULE DE BREVET EUROPÉEN

(45) Date de publication du fascicule du brevet :
02.01.86

(51) Int. Cl.⁴ : **B 62 D 5/083**, F 15 B 13/04

(21) Numéro de dépôt : **82401837.8**

(22) Date de dépôt : **06.10.82**

(54) **Distributeur rotatif hydraulique.**

(30) Priorité : **09.10.81 FR 8119041**

(43) Date de publication de la demande :
**20.04.83 Bulletin 83/16**

(45) Mention de la délivrance du brevet :
**02.01.86 Bulletin 86/01**

(84) Etats contractants désignés :
**DE GB IT SE**

(56) Documents cités :
**FR-A- 2 181 394**
**US-A- 4 050 474**

(73) Titulaire : **BENDIX France**
**Centre Paris Pleyel**
**F-93521 St-Denis Cedex 01 (FR)**

(72) Inventeur : **Kervagoret, Gilbert**
**5 Impasse Nobleterre**
**F-95100 Argenteuil (FR)**

(74) Mandataire : **Poidatz, Emmanuel et al**
**Service Brevets Bendix 44 rue François 1er**
**F-75008 Paris (FR)**

Jouve, 18, rue St-Denis, 75001 Paris, France

## Description

L'invention concerne un distributeur rotatif hydraulique du type à centre fermé, utilisable notamment dans un système de direction assistée d'un véhicule automobile, et plus particulièrement un distributeur du type comportant deux éléments de distributeur munis de parties cylindriques coaxiales montées en rotation dans un boîtier fixe, respectivement un élément de distributeur externe comportant un alésage axial et un élément de distributeur interne monté tournant dans ledit alésage et susceptible d'une rotation relative par rapport audit élément de distributeur externe de part et d'autre d'une position relative neutre, l'élément de distributeur externe comportant au moins un orifice d'alimentation débouchant dans ledit alésage et communiquant extérieurement avec un agencement de raccordement à une source de fluide sous pression, et au moins un orifice de distribution, débouchant dans ledit alésage et communiquant extérieurement avec un agencement de raccordement à une chambre d'un vérin d'assistance, la surface externe de l'élément de distributeur interne comportant des gorges d'alimentation longitudinales, susceptibles de coopérer, lors de l'actionnement du distributeur, avec l'orifice d'alimentation et avec l'orifice de distribution, et au moins une lumière de décharge, communiquant en permanence avec un circuit de décharge et susceptible de coopérer, lors de l'actionnement du distributeur, avec l'orifice de distribution, au moins certaines des gorges d'alimentation étant réunies par au moins une gorge circonférentielle formée dans la surface externe de l'élément de distributeur interne.

Un distributeur hydraulique de ce type est décrit dans le document US-A-4 050 474. Dans ce document, le distributeur est agencé pour alimenter deux systèmes différents, avec priorité pour l'un des systèmes, et est associé à un dispositif de dosage de fluide actionnable en réponse au déplacement du distributeur proprement dit. Ce dernier comporte des circuits de fluide mettant en œuvre plusieurs séries de trous d'alimentation et de distribution dans l'élément externe et trois séries de gorges longitudinales dans l'élément interne, réparties en une série double de gorges de transit pour l'alimentation du système auxiliaire, et deux séries disjointes et non intercommunicantes de gorges de distribution, les gorges de chaque série étant reliées centralement entre elles par une gorge circonférentielle. Pour la mise en œuvre du système principal prioritaire, le fluide sous pression est admis dans les gorges de distribution d'une série pour être adressé au dispositif de dosage, lequel adresse alors aux gorges de distribution de l'autre série une pression d'actionnement transmise au système principal, suivant un agencement général délicat, encombrant et onéreux.

La présente invention a pour objet de proposer un agencement de distributeur rotatif du type sus-mentionné de structure simple et compacte et se prêtant à une industrialisation particulièrement bon marché.

Pour ce faire, selon l'invention, la gorge circonférentielle réunit toutes les gorges d'alimentation et, dans la position neutre, l'orifice d'alimentation est obturé par une portion de la surface externe de l'élément de distributeur interne délimitée entre deux gorges d'alimentation adjacentes.

Un système de servodirection à centre fermé représente, généralement, un investissement plus élevé qu'un système comparable à centre ouvert dans la mesure où il nécessite un accumulateur de fluide sous pression, chargé en permanence par la pompe, pour alimenter le distributeur. En revanche, la consommation d'énergie est moindre pendant l'utilisation, notamment en conduite sur route ou autoroute, de sorte que cette solution peut néanmoins être avantageuse, surtout lorsque les composants du système et notamment le distributeur peuvent être produits à moindre coût.

Le distributeur rotatif selon l'invention a été conçu dans cet esprit. En particulier, on a cherché à éviter tout usinage de la surface interne de l'élément de distributeur externe en forme de manchon, les éléments de distribution portés par ce manchon étant uniquement constitués d'orifices radiaux et de gorges annulaires externes.

Selon un mode de réalisation préféré de l'invention, on prévoit deux gorges circonférentielles réunissant respectivement les extrémités axiales opposées de toutes les gorges d'alimentation.

Avec un tel agencement, le réseau d'alimentation constitué par les gorges d'alimentation et les gorges circonférentielles de liaison n'est mis en communication avec la haute pression qu'au-delà d'un certain décalage angulaire de part et d'autre de ladite position relative neutre, lorsque l'amorce d'une communication s'établit entre le ou les orifices d'alimentation et une ou plusieurs des gorges d'alimentation longitudinales. C'est par l'intermédiaire de ce réseau d'alimentation que la haute pression est transmise à un ou plusieurs orifices de distribution, c'est-à-dire à au moins l'une des chambres d'un vérin d'assistance.

L'invention sera mieux comprise et d'autres détails et avantages de celle-ci apparaîtront mieux à la lumière de la description à suivre donnée uniquement à titre d'exemple et faite en référence aux dessins annexés dans lesquels :

La figure 1   est une vue en coupe partielle d'un distributeur rotatif selon l'invention, la source de fluide sous pression et le vérin d'assistance étant également illustrés schématiquement ;

La figure 2   est une coupe II-II de la figure 1 ;

La figure 3   est une vue développée des deux éléments de distributeur avec notamment une vue schématique en coupe de l'élément de distributeur externe coopérant avec le boîtier fixe du distributeur ; et

La figure 4 est une vue analogue à la figure 3 représentant un autre mode de réalisation d'un distributeur conforme à l'invention, utilisable en liaison avec un vérin dissymétrique.

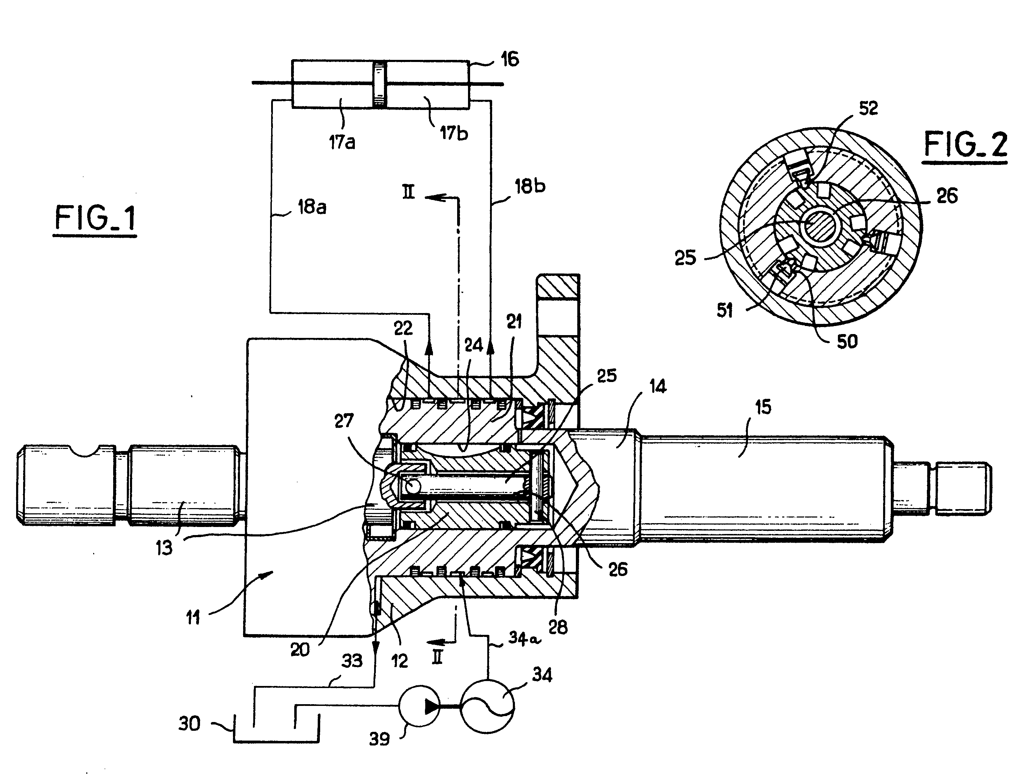

En se référant aux figures 1 à 3, on a représenté un distributeur 11 comportant un boîtier fixe 12 d'où font saillie un arbre d'entrée 13 destiné à être couplé à la colonne de direction du véhicule, et un arbre de sortie 14 muni d'un pignon 15 en prise avec la crémaillère (non représentée) du véhicule. Dans ce mode de réalisation, le vérin d'assistance 16, mécaniquement couplé à cette crémaillère, est du type symétrique et ses chambres 17a, 17b sont respectivement alimentées par des sorties de distribution de fluide (non représentées) du distributeur 11, via les conduits respectifs 18a, 18b. Le boîtier 12 renferme deux éléments de distributeur munis de parties cylindriques coaxiales, respectivement un élément de distributeur interne cylindrique 20 et un élément de distributeur annulaire externe 21. Ce dernier est matérialisé par exemple par une portion cylindrique élargie de l'arbre de sortie 14 ; il est monté en rotation dans un alésage axial 22 du boîtier 12. De façon classique, l'élément de distributeur externe 21 comporte un alésage axial 24 formant le palier dans lequel l'élément de distributeur interne 20 est monté en rotation. Celui-ci est couplé à l'arbre d'entrée 13 par l'intermédiaire d'un système d'articulation composé d'un axe ou barre de torsion 25 logé dans un espace interne 26, axial, de l'élément de distributeur 20 et relié respectivement par ses deux extrémités à l'arbre d'entrée 13 et à l'élément de distributeur 20 au moyen de deux goupilles perpendiculaires 27 et 28. L'espace interne 26 communique avec un réservoir de fluide hydraulique 30 ou bâche par l'intermédiaire notamment d'un embout de sortie, non visible sur les dessins, et d'un conduit de retour 33. Plusieurs agencements de raccordement sont définis par la coopération de l'élément de distributeur 21 et du boîtier 12. On distingue deux agencements de raccordement aux chambres 17a et 17b du vérin 16, constitués chacun par un embout du boîtier 12 (non visible sur les dessins) auquel est raccordé un conduit de distribution 18a ou 18b et par un passage annulaire correspondant 35a et 35b défini entre la surface externe de l'élément de distributeur 21 et l'alésage 22, ce passage annulaire étant en communication permanente avec l'embout correspondant. De façon analogue, un agencement de raccordement comportant un embout non visible sur les dessins et un passage annulaire 36 défini entre la surface externe de l'élément de distributeur 21 et l'alésage 22, permet le branchement d'une source de fluide sous pression 34, par l'intermédiaire d'un conduit 34a. La source de fluide 34 est dans la pratique constituée par un accumulateur chargé par une pompe 39 qui prélève le fluide hydraulique dans le réservoir 30. Les éléments de distributeur 20 et 21 sont munis d'orifices et de gorges assurant la distribution sélective du fluide sous pression en réponse à une rotation relative des deux éléments de distributeur de part et d'autre d'une position relative angulaire neutre. Sur les dessins, les éléments de distributeur sont représentés dans cette position relative neutre.

Plus précisément, l'élément de distributeur externe 21 comporte dans l'exemple représenté, trois orifices d'alimentation, radiaux 37, décalés de 120° les uns par rapport aux autres, débouchant dans l'alésage 24 et communiquant extérieurement en permanence avec le passage annulaire 36, ainsi que deux groupes (distingués par les indices a et b) d'orifices de distribution radiaux 38a ou 38b, débouchant dans l'alésage 24 et communiquant extérieurement en permanence avec les passages annulaires 35a et 35b, respectivement. Chaque groupe comporte dans l'exemple représenté, trois orifices de distribution décalés angulairement de 120° les uns par rapport aux autres.

Tous les orifices 37 et 38 sont de simples perçages à contour circulaire et on notera l'usinage extrêmement simple du manchon formant l'élément de distributeur externe 21 puisque celui-ci ne comporte que quelques gorges annulaires extérieures définissant les passages 35 et 36 et quelques perçages radiaux matérialisant les orifices 37 et 38.

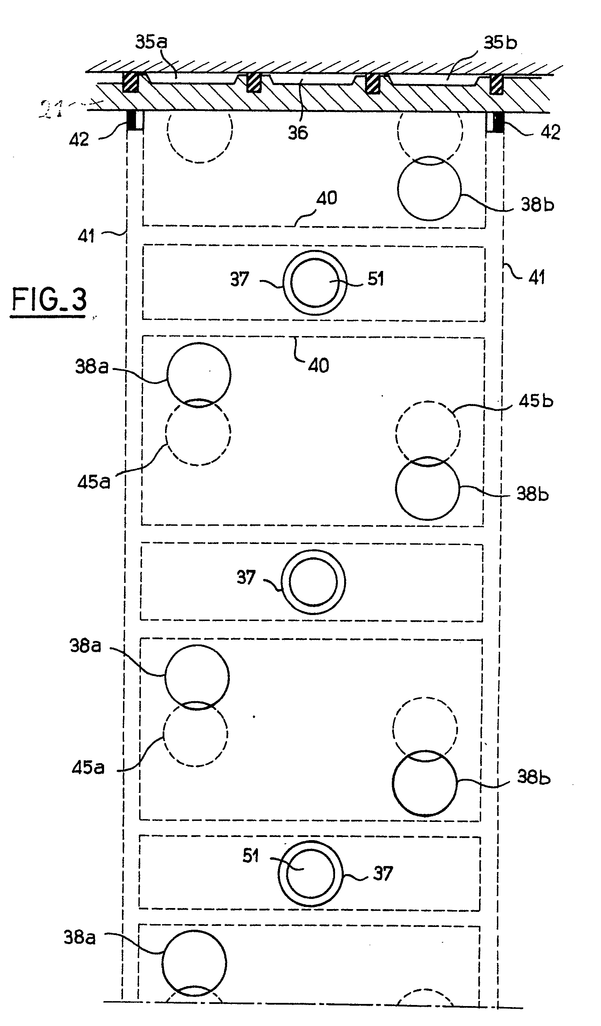

Selon l'invention, les orifices d'alimentation 37 coopèrent avec des gorges d'alimentation longitudinales 40 pratiquées à la surface externe de l'élément de distributeur interne 20. Plus précisément, chaque orifice d'alimentation 37 est obturé, dans ladite position neutre, par une portion de la surface externe dudit élément de distributeur interne 20 délimitée par deux gorges d'alimentation 40 adjacentes précitées, des gorges circonférentielles 41 formées dans la surface externe de l'élément interne 20 réunissent entre elles, toutes les gorges d'alimentation 40. Dans le mode de réalisation décrit, on a prévu deux gorges circonférentielles 41 réunissant respectivement les extrémités axiales des gorges d'alimentation 40. Chaque gorge circonférentielle 41 est en partie occupée par un joint annulaire 42 limitant les fuites de fluide sous pression vers les extrémités axiales du distributeur. D'autre part, chaque orifice de distribution 38a ou 38b est partiellement obturé par une portion de la surface externe de l'élément de distributeur interne 20 située entre une gorge d'alimentation 40 précitée et un agencement de décharge qui, dans l'exemple décrit, est constitué par un simple trou radial circulaire 45a ou 45b débouchant dans l'espace interne 26 de l'élément de distributeur 20, dans lequel se trouve logé l'axe 25, cet espace interne 26 communiquant avec le réservoir 30 comme indiqué ci-dessus. Dans la position neutre précitée, chaque orifice de distribution 38 communique avec le trou de décharge 45 qui lui correspond de sorte que les deux chambres 17a et 17b du vérin 16 soient en communication avec le réservoir 30. Chaque orifice d'alimentation 37 peut comporter un épaulement interne 50 formant le siège d'un clapet 51 destiné à limiter les fuites de fluide sous pression le long de la surface de l'alésage 24 lorsque les éléments de distributeur 20 et 21 sont en position relative neutre. Pour ce faire, le clapet 51 est prolongé dans la direction de l'élément de distributeur 20 par une tige 52 engagée dans une creusure conique pratiquée à la surface de l'élément de distributeur interne, cet agencement est illustré en particulier à la figure 2.

Le fonctionnement est des plus simples et découle avec évidence de la description qui précède. Lorsque les éléments de distributeur occupent leur position relative neutre, le vérin 16 ne transmet aucune force d'assistance à la timonerie de direction du véhicule puisque ses deux chambres 17a et 17b sont en communication avec le réservoir 30 via les orifices de distribution 38 et les trous de décharge 45, l'écoulement du fluide sous pression en provenance de l'accumulateur 34 étant empêché par les clapets 51 et aussi par le fait que les rainures 40 sont espacées à la fois des orifices d'alimentation 37 et des orifices de distribution 38. Lors d'un braquage, il se produit un décalage angulaire dans un sens ou dans l'autre entre les éléments de distributeur 20 et 21. Quel que soit le sens de rotation, l'ensemble du réseau d'alimentation constitué par les gorges 40 et 41 est mis sous pression et l'un des groupes d'orifices de distribution 38a ou 38b est mis en communication avec ce réseau. Il en résulte une augmentation de pression dans l'une des chambres du vérin, c'est-à-dire un effort d'assistance transmis à la crémaillère de direction des roues.

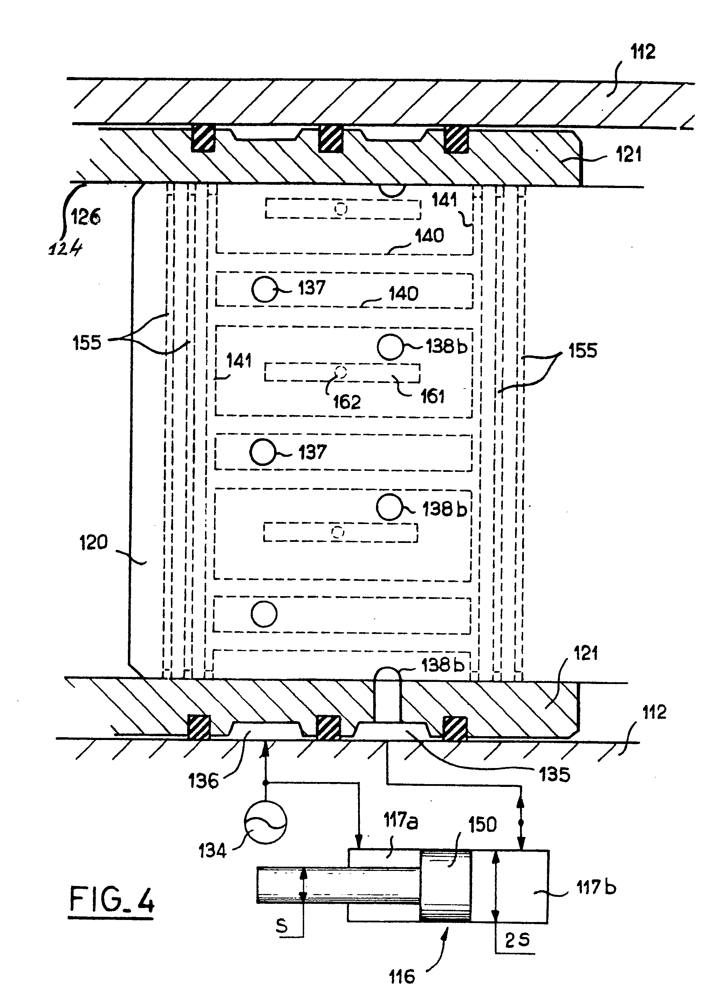

Dans le mode de réalisation de la figure 4, les éléments de structure analogues portent les mêmes références alphanumériques augmentées de 100. Ce mode de réalisation convient pour un vérin disymétrique 116 dans lequel la surface utile du piston 150 du côté de la chambre 117a est moitié de la surface utile du côté de la chambre 117b. Dans ces conditions, l'accumulateur 134 est relié en permanence à la fois au passage annulaire 136 et à la chambre 117a du vérin, tandis que le distributeur ne comporte plus qu'un seul groupe d'orifices de distribution 138b, susceptibles d'établir la communication avec la chambre 117b du vérin. Le réseau d'alimentation constitué par les gorges 140 et 141 est identique à celui du mode de réalisation précédent, chaque orifice d'alimentation 137 débouchant entre deux rainures 140 dans la position relative neutre précitée. En revanche, l'agencement de décharge est modifié puisque chaque orifice de distribution 138b est susceptible d'être mis en communication avec une rainure longitudinale 161 pratiquée dans l'élément de distributeur interne 120 et dont le fond est percé en 162 pour communiquer avec l'espace interne 126 de l'élément de distributeur interne 120. Dans la position neutre, les orifices de distribution 138b ne communiquent ni avec les gorges 140 ni avec les gorges 161 ; les variations de volume de la chambre 117b du vérin 116 pour de faibles décalages angulaires des éléments de distributeur de part et d'autre de la position relative neutre, sont compensées par l'écoulement de fuites du fluide sous pression qui s'établit entre la surface externe de l'élément de distributeur interne 120 et la surface interne de l'élément de distributeur externe 121. Une autre différence de structure par rapport au mode de réalisation précédent réside dans le fait que les joints d'étanchéité axiale 42 sont remplacés par des rainures circonférentielles de décompression 155 ménagées au voisinage des gorges circonférentielles 141 et de part et d'autre du réseau d'alimentation constitué par ces dernières et les gorges longitudinales 140.

En fonctionnement et lorsque les éléments de distributeur 120 et 121 sont en position relative neutre, la chambre 117b du vérin 116 est isolée alors que la pression de l'accumulateur 134 s'établit à l'intérieur de la chambre 117a. Une pression de moitié s'établit donc dans la chambre 117b étant donné le rapport des sections efficaces des deux faces du piston 150. Un équilibre s'établit donc et le vérin 116 ne transmet aucun effort d'assistance. Lors d'un braquage, les orifices 138b sont mis en communication soit avec des rainures 140 soit avec des rainures 161 ; la pression dans la chambre 117b a donc tendance à croître vers la pression nominale de l'accumulateur 134 ou à décroître lorsque ladite chambre est mise en communication avec l'agencement de décharge. Le piston 150 se déplace donc dans une direction ou dans l'autre pour fournir l'effort d'assistance souhaité.

**Revendications**

1. Distributeur rotatif hydraulique du type à centre fermé, notamment pour système de direction assistée de véhicule automobile, comportant deux éléments de distributeur (20, 21 ; 120, 121) munis de parties cylindriques co-axiales montées en rotation dans un boîtier (12 ; 112) fixe, respectivement un élément de distributeur externe (21 ; 121) comportant un alésage axial (24 ; 124) et un élément de distributeur interne (20 ; 120) monté tournant dans ledit alésage et susceptible d'une rotation relative par rapport audit élément de distributeur externe de part et d'autre d'une position relative neutre, l'élément de distributeur externe (21 ; 121) comportant au moins un orifice d'alimentation (37, 137), débouchant dans ledit alésage (24 ; 124) et communiquant extérieurement avec un agencement de raccordement (36 ; 136) à une source de fluide sous pression (34 ; 134), et au moins un orifice de distribution (38 ; 138b), débouchant dans ledit alésage et communiquant extérieurement avec un agencement de raccordement (35 ; 135) à une chambre d'un vérin d'assistance (16 ; 116), la surface externe de l'élément de distributeur interne (20, 120) comportant des gorges d'alimentation (40 ; 140) longitudinales, susceptibles de coopérer, lors de l'actionnement du distributeur, avec l'orifice d'alimentation (37, 137) et avec l'orifice de distribution (38, 138b), et au moins une lumière de décharge (45, 161, 162), communiquant en permanence avec un circuit de décharge (33) et susceptible de coopérer, lors de l'actionnement du distributeur, avec l'orifice de distribution (38, 138b), au moins certaines des gorges d'alimentation étant réunies par au moins une gorge circonférentielle (41 ; 141) formée dans la surface externe de l'élément de distributeur interne, caractérisé en ce que ladite gorge circonférentielle (41 ; 141) réunit toutes les gorges d'alimentation (40, 140) et en ce que, dans la position neutre, l'orifice d'alimentation (37, 137) est obturé par une portion de la surface externe de l'élément de distributeur interne (20 ; 120) délimitée entre deux gorges d'alimentation adjacentes (40 ; 140).

2. Distributeur selon la revendication 1, caractérisé en ce que la gorge circonférentielle (41, 141) réunit les extrémités axiales des gorges d'alimentation (40 ; 140).

3. Distributeur selon la revendication 2, caractérisé en ce qu'il comprend deux gorges circonférentielles (41 ; 141) réunissant respectivement les extrémités axiales opposées des gorges d'alimentation (40 ; 140).

4. Distributeur selon l'une des revendications précédentes, caractérisé en ce que, dans la position relative neutre, l'orifice de distribution (38 ; 138b) est au moins partiellement obturé par une portion de la surface externe de l'élément de distributeur interne (20 ; 120) située entre une gorge d'alimentation (40 ; 140) précitée et une lumière de décharge (45 ; 161, 162) précitée adjacente.

5. Distributeur selon l'une des revendications 1 à 4, dans lequel l'élément de distributeur interne (120) comporte une partie tubulaire dont l'espace interne (126) communique avec le circuit de décharge (33), caractérisé en ce que la lumière de décharge comprend au moins une rainure longitudinale (161) pratiquée dans l'élément de distributeur interne et dont le fond est percé (162) pour communiquer avec ledit espace interne (126).

6. Distributeur selon l'une des revendications 1 à 4, dans lequel l'élément de distributeur interne (20) comporte une partie tubulaire dont l'espace interne (26) communique avec le circuit de décharge (33), caractérisé en ce que la lumière de décharge comprend au moins un trou circulaire (45) pratiqué dans l'élément de distributeur interne et débouchant dans ledit espace interne.

7. Dispositif selon la revendication 6, caractérisé en ce que l'élément de distributeur externe (21) comporte deux ou deux groupes (a, b) distincts d'orifices de distribution (38a, 38b) précités, communiquant extérieurement et respectivement avec deux agencements de raccordement (35a, 35b) aux deux chambres d'un vérin d'assistance (16), et en ce que, dans la position relative neutre, les orifices de distribution (38) sont chacun en communication avec une lumière de décharge correspondante (45).

8. Dispositif selon l'une des revendications 2 à 7, caractérisé en ce qu'il comporte des rainures circonférentielles de décompression (155) ménagées au voisinage de la gorge circonférentielle (141).

## Claims

1. A rotary hydraulic distributor of the closed center type, in particular for a servo steering system of an automotive vehicle, comprising a pair of distributor elements (20, 21 ; 120, 121) having coaxial cylindrical portions rotatably mounted in a fixed casing (12 ; 112), respectively an external distributor element (21 ; 121) including an axial bore (24 ; 124) and an internal distributor element (20 ; 120) rotatably mounted in said bore and adapted to perform a relative rotation with respect to said external distributor element in opposite directions from a relative neutral position, the external distributor element (21 ; 121) including at least one supply orifice (37, 137) opening into said bore (24 ; 124) and externally communicating with means (36 ; 136) for connection to a fluid pressure source (34 ; 134), and at least one distributor orifice (38 ; 138b) opening into said bore and externally communicating with means (35 ; 135) for connection to a chamber of a servo motor (16 ; 116), the external surface of the internal distributor element (20, 120) comprising longitudinal supply grooves (40 ; 140) adapted to cooperate upon actuation of the distributor with the supply orifice (37, 137) and the distributor orifice (38, 138b), and at least one discharge port (45, 161, 162) permanently communicating with a discharge circuit (33) and adapted to cooperate upon actuation of the distributor with the distributor orifice (38, 138b), at least certain of the supply grooves being interconnected by at least one circumferential groove (41 ; 141) formed in the external surface of the internal distributor element, characterized in that said circumferential groove (41 ; 141) interconnects all the supply grooves (40, 140) and in that in the neutral position the supply orifice (37, 137) is closed by a portion of the external surface of the internal distributor element (20 ; 120) delimited between two adjacent supply grooves (40 ; 140).

2. Distributor according to claim 1, characterized in that the circumferential grooves (41, 141) interconnects the axial extremities of the supply grooves (40 ; 140).

3. Distributor according to claim 2, characterized in that it comprises two circumferential grooves (41 ; 141) interconnecting, respectively, the opposed axial extremities of the supply grooves (40 ; 140).

4. Distributor according to any of the preceding claims, characterized in that in the relative neutral position the distributor orifice (38 ; 138b) is at least partially closed by a portion of the external surface of the internal distributor element (20 ; 120) disposed between one (40 ; 140) of said supply grooves and an adjacent one of said discharge ports (45 ; 161, 162).

5. Distributor according to any of claims 1 to 4, wherein the internal distributor element (120) comprises a tubular portion, whose internal space (126) communicates with the discharge circuit (33), characterized in that the discharge port comprises at least one longitudinal groove (161) provided in the internal distributor element and having a bottom provided with a bore (162) for communicating with said internal space (162).

6. Distributor according to any of claims 1 to 4, wherein the internal distributor element (20) comprises a tubular portion having an internal space (26) communicating with the discharge circuit (33), characterized in that the discharge port comprises at least one circular hole (45) provided in the internal distributor element and opening into said internal space.

7. Distributor according to claim 6, characterized in that the external distributor element (21) comprises two or two distinct groups (a, b) of said distributor orifices (38, 38b), externally communicating, respectively, with two means (35a, 35b) for connection to two chambers of a servo motor (16), and in that in the relative neutral position the distributor orifices (38) are each in communication with a corresponding discharge port (45).

8. Distributor according to any of claims 2 to 7, characterized in that it comprises depressurizing circumferential grooves (155) provided adjacent said circumferential groove (141).

## Patentansprüche

1. Rotations-Hydraulikverteiler mit geschlossenem Kreis, insbesondere für eine Kraftfahrzeug-Servolenkeinrichtung, mit zwei Verteilerelementen (20, 21 ; 120, 121), die mit koaxialen, zylindrischen Abschnitten versehen sind, die in einem ortsfesten Gehäuse (12 ; 112) drehbar gelagert sind, und zwar einem äußeren Verteilerelement (21 ; 121), das eine Axialbohrung (24 ; 124) aufweist, und einem inneren Verteilerelement (20 ; 120), das in der Axial-Bohrung drehbar gelagert ist und bezüglich des äußeren Verteilerelementes eine Relativdrehung beidseitig zu einer relativen neutralstellung ausführen kann, wobei das äußere Verteilerelement (21 ; 121) eine Zuströmöffnung (37 ; 137) aufweist, die in der Axialbohrung (24 ; 124) mündet und außen mit einem zu einer Druckmittelquelle (34 ; 134) führenden Anschluß (36 ; 136) verbunden ist, sowie mindestens eine Verteileröffnung (38 ; 138b), die in der Axialbohrung mündet und außen mit einem zu einer Kammer eines Servomotors (16 ; 116) führenden Anschluß (35 ; 135) verbunden ist, wobei die Außenfläche des inneren Verteilerelementes (20 ; 120) längs verlaufende Zuströmnuten (40 ; 140) aufweist, die bei Betätigung des Verteilers mit der Zuströmöffnung (37 ; 137) und der Verteileröffnung (38, 138b) zusammenwirken, sowie mindestens eine Ablaßöffnung (45, 161, 162), die dauernd mit einem Ablaßkreis (33) verbunden ist und bei Betätigung des Verteilers mit der Verteileröffnung (38, 138b) zusammenwirkt, wobei mindestens einige der Zuströmnuten durch mindestens eine in der Außenfläche des inneren Verteilerelements gebildeten Ringnut (41 ; 141) untereinander verbunden sind, dadurch gekennzeichnet, daß die Ringnut (41 ; 141) sämtliche Zuströmnuten (40, 140) miteinander verbindet und daß in der Neutralstellung die Zuströmöffnung (37, 137) durch einen von zwei benachbarten Zuströmnuten (40 ; 140) begrenzten Abschnitt der Außenfläche des inneren Verteilerelementes (20 ; 120) verschlossen ist.

2. Verteiler nach Anspruch 1, dadurch gekennzeichnet, daß die Ringnut (41, 141) die axialen Enden der Zuströmnuten (40 ; 140) miteinander verbindet.

3. Verteiler nach Anspruch 2, dadurch gekennzeichnet, daß er zwei Ringnuten (41 ; 141) aufweist, die die entgegengesetzten axialen Enden der Zuströmnuten (40 ; 140) miteinander verbinden.

4. Verteiler nach einem der vorhergehenden Ansprüche, dadurch gekennzeichnet, daß in der Neutralstellung die Verteileröffnung (38 ; 138b) zumindest teilweise von einem Abschnitt der Außenfläche des inneren Verteilerelements (20 ; 120) verschlossen ist, der sich zwischen einer der Zuströmnuten (40 ; 140) und einer benachbarten Ablaßöffnung (45 ; 161, 162) befindet.

5. Verteiler nach einem der Ansprüche 1 bis 4, bei dem das innere Verteilerelement (120) einen rohrförmigen Abschnitt aufweist, dessen Innenraum (126) mit dem Ablaßkreis (33) in Verbindung steht, dadurch gekennzeichnet, daß die Ablaßöffnung mindestens eine Längsnut (161) aufweist, die in dem inneren Verteilerelement gebildet ist und dessen Boden zwecks Verbindung mit dem Innenraum (126) durchbohrt (162) ist.

6. Verteiler nach einem der Ansprüche 1 bis 4, bei dem das innere Verteilerelement (20) einen rohrförmigen Abschnitt aufweist, dessen Innenraum (26) mit dem Ablaßkreis (33) in Verbindung steht, dadurch gekennzeichnet, daß die Ablaßöffnung mindestens ein kreisförmiges Loch (45) aufweist, das in dem inneren Verteilerelement gebildet ist und in den Innenraum mündet.

7. Verteiler nach Anspruch 6, dadurch gekennzeichnet, daß das äußere Verteilerelement (21) zwei Verteileröffnungen (38a, 36b) oder zwei getrennte Gruppen (a, b) von Verteileröffnungen (38a, 38b) aufweist, die außen mit zwei zu zwei Kammern eines Servomotors (16) führenden Anschlüssen (35a, 35b) in Verbindung stehen, und daß in der Neutralstellung die Verteileröffnung (38) jeweils mit einer entsprechenden Ablaßöffnung (45) in Verbindung steht.

8. Verteiler nach einem der Ansprüche 2 bis 7, dadurch gekennzeichnet, daß er Entlastungs-Ringnuten (155) aufweist, die benachbart zu der besagten Ringnut (141) gebildet sind.

FIG_1

16

17a    17b

18a    II    18b

22    24    21    25    14    15

27    II

13

11    26

20    33    12    II    34a    28

30    39    34

FIG_2

52

26

25    51    50

0 077 263

FIG.3

FIG. 4